# EUROPEAN PATENT SPECIFICATION

(11) **EP 0 740 762 B1**
(45) Date of publication and mention of the grant of the patent: **16.09.1998**
(21) Application number: 95905243.2
(22) Date of filing: 17.01.1995
(51) Int. Cl.: F24F 12/00

(54) **TEMPERATURE CONTROL OF VENTILATION AIR**
LÜFTUNGSLUFT-TEMPERATURREGELUNG
REGULATION DE LA TEMPERATURE DE L'AIR DE VENTILATION

(30) Priority: 01.02.1994 NL 9400152
(43) Date of publication of application: 06.11.1996
(73) Proprietor: URSUS B.V., 1018 MR Amsterdam (NL)
(72) Inventor: MIDDENDORF, Johann, Gerhard, NL-1447 KJ Purmerend (NL)
(86) International application number: NL9500022
(87) International publication number: WO9521357

(56) References cited:
- NL-A- 8 501 084
- NL-C- 41 439

## Description

The invention concerns a device where used ventilation air is used to bring fresh outside air to the desired temperature before it is conveyed to the space to be ventilated. Heat regenerators are used for this purpose which in turn feature heating and cooling of the passing air. To control the temperature of the space to be ventilated the device is provided with the possibility for cooling or heating of the flow of used ventilation air.

Characteristic of the invention is the fact that the fresh outside air is only passing the heat regenerator and next transported into the space by a ventilator. The heat regenerators are heated by the used ventilation air to the correct temperature by heating or cooling the used ventilation air as is required.

A device like this is known from the European patent EP-A-128188 (corresponds to WO-A-8402392). This patent describes a system where heat regenerators take up the heat from the used air and supply it to the fresh air. The temperature in the building has to be controlled by a separate heating system. The Dutch patent application NL-A-8501084 mentions a like system where the fresh air can be cooled by atomised water wetting the regenerator slabs. This system has also no provisions to control the temperature by heating. Furthermore this system is a very "wet" system where easy growth of algae and mould is possible. It has been found that treatment of intake air with water or heating elements and filters will bring unwanted smells, vapours and bacteria into the ventilated space.

The invention as defined in claim 1, aims at preventing these drawbacks by having the incoming air only in contact with the heat regenerators and blown into the space to be ventilated by a ventilator. The temperature control is made possible by conditioning the used air so that this air brings the heat regenerators to the correct temperature. The used air is extra heated in the case that the space has to be warmed up and is cooled down when the space must be cooled. Cooling takes place by atomising water to a high degree while by turbulence the water is vapourised before this can wet the slabs of the heat regenerator.

The invention will be described following the drawings.

Fig.1 shows a diagram of the installation.

Fig. 2 shows a diagram of the change-over valve with atomisers.

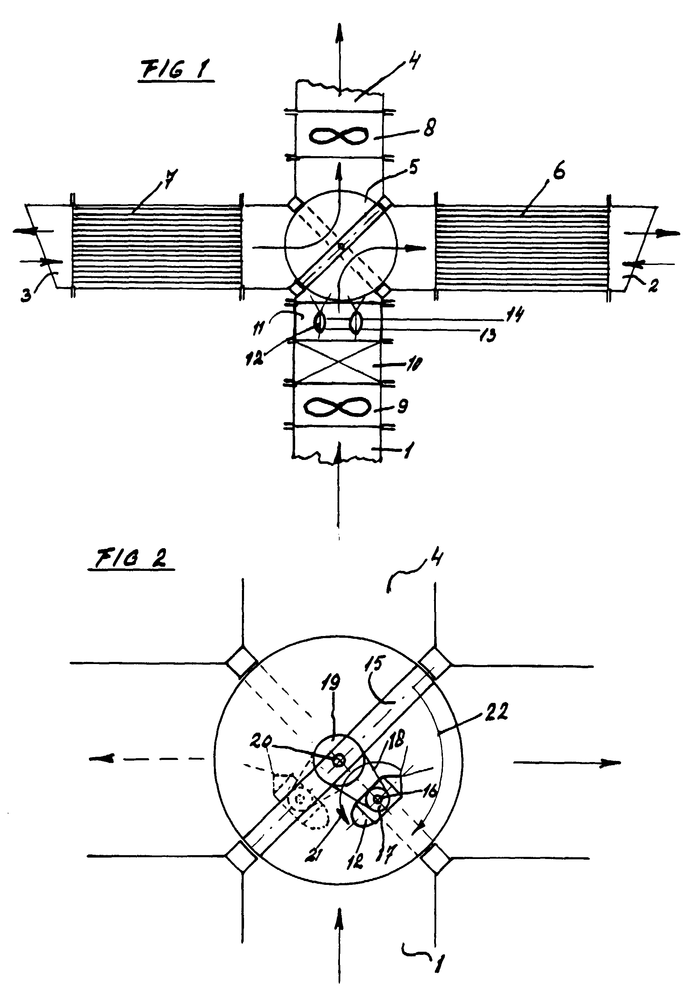

In fig. 1 is indicated with (1) the exhaust channel of the space. Vith (2) and (3) are connections to the outside air indicated. At (4) the fresh air enters the space. With (5) is a change-over valve which governs the intermittent airstreams through heat regenerators (6) and (7). (8) is a ventilator for the airstream to the space and (9) is a ventilator for the exhaust airstream out of the space. At (10) is a heating unit and at (11) a section with water atomisers (12) with water supply (13) and compressed air supply (14).

### Operation is as follws:

The used air leaves through channel (1) via a (not drawn) filter and is sucked-in by ventilator (9), passes heating unit (10) and water atomising unit (11) and is conveyed by the change-over valve (5) via heat regenerator (6) to the outside air (2).

In the same time ventilator (8) will transport outside air via opening (3) and heat regenerator (7) along change-over valve (5) to the space. When the change-over valve (5) is placed in the position indicated by broken lines the airstreams in the heat regenerators (6) and (7) reverse thereby alternating take up or delivery of heat.

In case that the intake air after entering through the heat regenerator (7) is too low in temperature the heating unit (10) will be activated and raise the temperature of the used air. Heat regenerator (6) will take up more heat and after changing of the airstreams deliver fresh air of a higher temperature.

In case that the space has to be cooled down the used air of channel (1) is cooled by vapourising very fine atomised water by atomisers (12). The used air lowers in temperature and heat regenerator (6) will deliver air of a lower temperature after changing.

In this way it is possible to deliver fresh outside air at the desired temperature practically without forming condensation in the heat regenerators (6, 7) and air ducts and have an operation possible that is clean and without smells.

An advantageous construction of the change-over valve is shown in Fig. 2.

In many cases the available space is limited. By mounting the atomisers (12) on the side of the valve body (15) instead of in channel (1), the atomisers are in a place of high turbulence which favours vapourisation. Herewith it is necessary that the atomiser (12) turns 180 degrees when the change-over valve (15) revolves. Therefore the atomisers (12) are mounted on a shaft (16) which is parallel with the axis of valve body (15). The shaft is supported with supports (not shown) to the valve body (15). Revolving of the shaft (16) is executed by a combination of gear (17), toothed belt or chain (18) and gear (19). Gear (19) is fixed to the shaft (20). Shaft (20) is held steady while the valve body (15) turns around shaft (20). The relation of the number of teeth of gears (17) and (19) determines the rotating angle (21) of the shaft (16) of the atomisers (12) in relation to the angle (22) of the valve body (15). The position of the atomisers (12) when the valve body (15) is rotated is indicated with a broken line.

## Claims

1. Method for temperature control of ventilating air using a pair of heat regenerators (6, 7) and a central change-over valve (5) characterised in that the used air is first conditioned to the required temperature by heating or cooling means before passing through one heat regenerator (6, 7) of the pair and then being expelled to the outside by means of a first ventilator (9) and fresh outside air is simultaneously led via the other heat regenerator (6, 7) of the pair directly to the space to be ventilated by means of a second ventilator (8) whereby the flows of used air and fresh outside air are switched alternately between the first and second heat regenerators (6, 7) of the pair by means of the central change-over valve (5) such that one heat regenerator (6, 7) of the pair is always being brought to the desired temperature by the passage of the preconditioned used air therethrough, whilst the incoming fresh air is being brought to the desired temperature by passage through the other heat regenerator (6, 7).

2. Method for temperature control of ventilating air as in claim 1 characterised in that the used air is conditioned by a unit which is provided with a filter, a ventilator (9), a heater (10) and a device (11) with water atomisers (12).

3. Method for temperature control of ventilating air as in 2 characterised in that the atomisers (12) for water are mounted on the change-over valve (15) where the atomisers (12) by means of a transmission (17, 18 and 19) turn around 180 degrees with a shaft (16) which is parallel to the shaft (20) of the change-over valve (15).

4. Method for temperature control of ventilating air as in claims 1, 2 and 3 characterised in that the heat regenerators (6, 7) are of the type where a number of slabs made of heat absorbent material are placed at short distance parallel to and in the airstream and that these function as well for cooling as for heating of the airstream.

## Patentansprüche

1. Methode zur Temperaturkontrolle von ventilierter Luft unter Verwendung von einem Paar Hitzeregeneratoren (6, 7) und einem zentralen Wechselventil (5) mit dem Kennmerk, daß die verwendete Luft zunächst auf die erforderliche Temperatur, wärmer oder kälter, gebracht wird, bevor sie durch einen der Hitzeregeneratoren (6, 7) geleitet wird. Anschließend wird die Luft durch einen ersten Ventilator (9) nach Außen geleitet und frische Außenluft wird gleichzeitig über den Anderen der beiden Hitzeregeneratoren (6, 7) von dem zweiten Ventilator (8) direkt zu dem zu ventilierenden Raum geleitet wobei der Luftstrom von gebrauchter und frischer Außenluft von dem Wechselventil (5) abwechselnd über den ersten und zweiten Hitzeregenerator (6,7) so geleitet wird, daß einer der Hitzeregeneratoren (6, 7) immer auf die erforderliche Temperatur gebracht wird, indem die durchströmende, vorbehandelte benutzte Luft durchströmt während eingenommene frische Luft auf die erforderliche Temperatur gebracht wird indem sie durch den anderen Hitzeregenerator 6, 7) strömt.

2. Methode zur Temperaturkontrolle von ventilierter Luft wie in Punkt 1 beschrieben nur mit dem Kennmerk daß die benutzte Luft von einer Einheit behandelt wird die mit einem Filter, einem Ventilator (9) einer Heizung (10) und einer Vorrichtung (11) mit Wasser Atomizers (12).

3. Methode zur Temperaturkontrolle von ventilierter Luft wie in Punkt 2 beschrieben nur mit dem Kennmerk daß die Atomizer (12) für das Wasser in dem Wechselventil (15) montiert sind wo die Atomizer (12) durch Antrieb (17, 18 und 19) 180 Grad durch Welle (16) gedreht werden die parallel zu Welle (20) des Wechselventils verläuft.

4. Methode zur Temperaturkontrolle von ventilierter Luft wie in Punkt 1, 2, und 3 beschrieben nur mit dem Kennmerk daß die Hitzeregeneratoren (6, 7) mit hitzeabsorbierenden Fächern dicht nebeneinander parallel in dem Luftstrom liegen und daß diese Funktion sowohl zur Kühlung alsauch zur Erwärmung des Luftstroms angewendet wird.

## Revendications

1. Méthode de contrôle de température de la ventilation en utilisant un pair de régénérateurs de chaleur (6,7) et une valve centrale de commutation (5) qui fait que l'air utilisé est conditionné à la température exigée, en réchauffant ou en refroidissant, avant de passer par un des régénérateurs (6,7) de chaleur et d'être refoulé vers l'extérieur à l'aide d'un ventilateur (9). De l'air frais de l'extérieur passe par le deuxième régénérateur de chaleur (6,7) et va directement vers l'espace où il sera ventilé à l'aide d'un autre ventilateur (8). La circulation de l'air utilisé et de l'air frais est alternativement commutée entre les deux régénérateurs de chaleur (6,7) à l'aide de la valve centrale de commutation (5), de manière qu'un régénérateur de chaleur a toujours la température désirée pour l'air utilisé qui le traverse, et l'autre régénérateur (6,7) a la température pour l'air frais entrant.

2. Méthode de contrôle de température de la ventilation comme expliquée à la revendication N° 1. Son caractéristique est que l'air utilisé est conditionné à l'aide d'une unité qui comporte un filtre, un ventilateur (9), un réchauffeur (10) et un dispositif (11) à vaporisateurs (12).

3. Méthode de contrôle de température de la ventilation comme expliquée à la revendication N° 2. Son caractéristique est que les vaporisateurs (12) se trouvent dans la valve de commutation (15) où, à laide de moyens de transmission (17,18 et 19), ils font un tour de 180° degrés avec un axe (16) qui est parallèle à l'axe (20) de la valve de commutation (15).

4. Méthode de contrôle de température de la ventilation comme expliquée aux revendications N° 1, 2 et 3. Son caractéristique est que les régénérateurs de chaleur (6,7) utilisés contiennent un nombre de tranches de matériel absorbant la chaleur qui sont placées côte à côte et parallèlement au courant d'air et qui fonctionnent pour le refroidissement et le réchauffement du courant d'air.
